(19) **Europäisches Patentamt**
**European Patent Office**
**Office européen des brevets**

(11) **EP 4 679 359 A1**

(12) **EUROPEAN PATENT APPLICATION**

(43) Date of publication:
14.01.2026 Bulletin 2026/03

(21) Application number: 24188034.3

(22) Date of filing: 11.07.2024

(51) International Patent Classification (IPC):
*G06T 5/60* (2024.01)    *G06T 5/70* (2024.01)

(52) Cooperative Patent Classification (CPC):
**G06T 5/70; G06T 5/50; G06T 5/60;**
G06T 2207/10081; G06T 2207/20081;
G06T 2207/20084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Siemens Healthineers AG**
**91301 Forchheim (DE)**

(72) Inventors:
- **Roser, Philipp**
  **91052 Erlangen (DE)**
- **Syben, Christopher**
  **90556 Cadolzburg (DE)**

(74) Representative: **Siemens Healthineers**
**Patent Attorneys**
**Postfach 22 16 34**
**80506 München (DE)**

(54) **DENOISING MEDICAL IMAGING DATA**

(57)     For denoising medical imaging data, a first imaging dataset (HE) and a second imaging dataset (LE) are decomposed according to spatial frequency bands to generate high-frequency datasets (HE-HF, LE-HF) corresponding to a high-frequency band and low-frequency datasets (HE-LF, LE-LF) corresponding to a low-frequency band. A trainable denoising algorithm (7) is trained by carrying out an optimization, which uses at least one parameter of the denoising algorithm (7) as optimization variable and an objective function (L1, L2, L3, L4, L5), which depends on a denoised high-frequency dataset (HE-HF') and the high-frequency dataset of the second imaging dataset (LE-HF). The denoised high-frequency dataset (HE-HF') is generated by applying the denoising algorithm (7) to the high-frequency dataset of the first imaging dataset (HE-HF). The trained denoising algorithm (7) is applied to the high-frequency dataset of the first imaging dataset (HE-HF) to generate a final denoised high-frequency dataset (HE-HF').

FIG 2

**Description**

The present invention is directed to a computer-implemented method for denoising medical imaging data, wherein a first imaging dataset generated according to a first imaging parameter set and depicting an object and a second imaging dataset generated according to a second imaging parameter set depicting the object are received. The invention is further directed to a data processing system for carrying out such a computer-implemented method and to a corresponding computer program product.

In spectral X-ray imaging, spectral computed tomography, CT, or spectral cone beam CT, CBCT, the same scene is for example acquired with different X-ray spectra to separate otherwise ambiguous materials. Since the same scene is acquired multiple times, simultaneously or sequentially, the total applied dose is proportionally higher as compared to a conventional X-ray or CT procedure. To mitigate excess doses, the doses of individual acquisitions may be lowered such that the total dose is not significantly higher than the standard dose of a monoenergetic acquisition. This, in turn, increases the amount of noise in the medical imaging data. The noise may be further amplified when material decomposition methods are employed. Furthermore, one may use multi-layer detectors. The noise in such detectors increases with increasing depth.

As a consequence, rather strong denoising may be applied. This is, in general, a difficult task as it is always a trade-off between noise suppression and preservation of fine potentially relevant details. An established class of denoising algorithms corresponds to bilateral filters, in particular joint bilateral filters, which are used in most clinical systems. It is, however, time-consuming and can yield artifacts or intensity drifts. Guided filtering potentially is faster than bilateral filtering but is not widely adopted. It relies on a guidance image whose impact is not well foreseeable.

Similar situations may arise also in the context of other medical imaging devices such as magnetic resonance imaging, MRI. There, the noise may for example be increased when using MRI sequences with short acquisition times.

These drawbacks may for example be overcome at least partially by using trained machine learning models, MLMs, for example artificial neural networks, ANNs, for denoising. For example, denoising ANNs such as the Noise2Noise proposed in the publication J. Lehtinen et al.: "Noise2Noise: Learning Image Restoration without Clean Data" (ar-Xiv:1803.04189) or ANNs based on the U-Net architecture as introduced in the publication by O. Ronneberger et al.: "U-Net: Convolutional Networks for Biomedical Image Segmentation" (arXiv:1505.04597), work well but rely on matching training pairs which are difficult to acquire, especially in the field of medical imaging.

It is an objective of the present invention, to provide an improved concept for denoising medical imaging data, wherein two imaging datasets acquired with different imaging parameters are provided, which allows for an effective denoising without losing potentially relevant details but also without requiring training images and correspondingly annotated ground truth images.

This objective is achieved by the subject matter of the independent claim. Further implementations and preferred embodiments are subject matter of the dependent claims.

The invention is based on the insight that, in a hypothetical ideal situation without noise, medical imaging data acquired with different imaging parameters usually have the same or very similar structural information, that is information in high spatial frequency ranges, but differ in their intensity or low spatial frequency information. In non-ideal situations, that is in realistic situations with noise, the contents of the medical imaging data acquired with different imaging parameters differ in the specific manifestations of the noise also in the high-frequency range. Thus, according to the invention, a frequency decomposition of the imaging datasets is carried out and an optimization of a trainable denoising algorithm is carried out, wherein an objective function depends on a denoised high-frequency dataset based on high-frequency content of the first imaging dataset and the high-frequency content of the second imaging dataset.

According to an aspect of the invention, a computer-implemented method for denoising medical imaging data is provided. Therein, a first imaging dataset generated according to a first imaging parameter set and depicting an object and a second imaging dataset generated according to a second imaging parameter set depicting the object are received. The first imaging dataset and the second imaging dataset are decomposed according to two or more spatial frequency bands. The decomposition comprises generating a high-frequency dataset of the first imaging dataset and a high-frequency dataset of the second imaging dataset corresponding to a high-frequency band of the two or more spatial frequency bands. The decomposition also comprises generating a low-frequency dataset of the first imaging dataset and a low-frequency dataset of the second imaging dataset corresponding to a low-frequency band of the two or more spatial frequency bands. A trainable denoising algorithm is trained by carrying out an optimization, which uses at least one parameter of the denoising algorithm as at least one parameter optimization variable and an objective function. The objective function depends on a denoised high-frequency dataset and the high-frequency dataset of the second imaging dataset. Therein, the denoised high-frequency dataset is generated by applying the denoising algorithm to the high-frequency dataset of the first imaging dataset. The trained denoising algorithm is applied to the high-frequency dataset of the first imaging dataset to generate a final denoised high-frequency dataset.

Unless stated otherwise, all steps of the computer-implemented method may be performed by a data processing system, which comprises at least one data processing device. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to execute the computer-implemented method. The expressions "data processing system" and "at least one data processing device" may be used interchangeably, here and in the following. This holds also for respective expressions derived therefrom.

In case the at least one data processing device comprises two or more data processing devices, certain steps carried out by the at least one data processing device may also be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of a method for denoising medical imaging data, which is not purely computer-implemented, is obtained by including respective steps of generating the first imaging dataset and the second imaging dataset, in particular by a medical imaging device.

For example, the medical imaging data comprises or consists of the first imaging dataset and the second imaging dataset. The final denoised high-frequency dataset may be considered as a result of the computer-implemented method. The final denoised high-frequency dataset may for example be recombined with the low-frequency dataset of the first imaging dataset or a final denoised low-frequency dataset of the first imaging dataset to generate a recombined first imaging dataset. It is also possible that a final denoised high-frequency dataset of the second imaging dataset is generated. The final denoised high-frequency dataset of the second imaging dataset may for example be recombined with the low-frequency dataset of the second imaging dataset or a final denoised low-frequency dataset of the second imaging dataset to generate a recombined second imaging dataset. It is noted, however, that the denoising may not be mandatory for the low-frequency datasets, since the noise may be significant only in high-frequency datasets. The recombined first imaging dataset and/or the recombined second imaging dataset may for example be used as a basis for medical analysis of the depicted object. The recombination steps and/or steps for generating the final denoised low-frequency datasets of the first imaging dataset and/or the first imaging dataset and/or steps for generating the final denoised high-frequency dataset of the second imaging dataset are not necessarily part of the computer-implemented method according to the invention but may be part of the computer-implemented method according to the invention in some embodiments.

An imaging dataset may for example be a two-dimensional image, for example X-ray image or MRI image, or a three-dimensional volume reconstruction, for example CBCT reconstruction, CT reconstruction or MRI reconstruction. An imaging dataset may also be a two-dimensional patch of such a two-dimensional image or a three-dimensional volume part of such a three-dimensional volume reconstruction. A CBCT reconstruction or CT reconstruction may also be denoted as X-ray-based image reconstruction.

An imaging parameter set comprises one or more imaging or acquisition parameters. If the first imaging dataset and the second imaging dataset have been generated by an X-ray device or a CT device or a CBCT device, the respective imaging parameter sets may for example comprise one or more parameters affecting or defining an X-ray spectrum emitted by an X-ray source of the device for generating the respective imaging dataset, for example a peak kilovoltage, kVp, a tube current, a filter material and/or filter thickness of an X-ray filter, a parameter specifying whether an anti-scattering grid is used or not, a property of the anti-scattering grid, or a parameter of an X-ray detector of the device, such as a gain factor. In case of a photon-counting CT device, the respective imaging parameter sets may also comprise an energy threshold of the X-ray detector, et cetera. In case of an MRI device, the respective imaging parameter sets may for example comprise one or more parameters affecting or defining an acquisition time used for generating the respective imaging dataset.

The first imaging parameter set differs from the second imaging parameter set. In other words, at least one parameter value of the first imaging parameter set differs from the respective parameter values of the second imaging parameter set. Consequently, in case of an X-ray device or a CT device or a CBCT device, the first imaging dataset and the second imaging dataset correspond to different emitted and/or detected X-ray energy spectra. In case of an MRI device the first imaging dataset and the second imaging dataset correspond to different acquisition times. Apart from that, the first imaging dataset and the second imaging dataset depict the same or approximately the same part of the object from the same or approximately the same perspective, if applicable.

The decomposition may be carried out separately for the first imaging dataset and the second imaging dataset. Known methods for frequency decomposition may be used for this purpose, including for example a Fourier decomposition, a wavelet decomposition, and so forth. A result of the decomposition of the first imaging dataset comprises the high-frequency dataset of the first imaging dataset and the low-frequency dataset of the first imaging dataset. The high-frequency band corresponds to higher spatial frequencies than the low-frequency band. It is possible that the decomposition is done according to only these two frequency bands. It is possible, however, that the two or more spatial frequency bands comprise one or more additional frequency bands. In general, the decomposition yields one respective frequency-specific imaging dataset for each frequency band of the two or more spatial frequency bands. These explanations hold analogously for the decomposition of the second imaging dataset.

Each frequency-specific imaging dataset is given in the image domain or position domain just as the first imaging dataset and the second imaging dataset. For example, the decomposition may comprise a transformation into the frequency domain, for example using a Fourier transform or the like, a separation of the transformed imaging dataset according to the two or more spatial frequency bands, and an inverse transformation of the resulting separated frequency data in the image domain.

The objective function, which may also be denoted as loss function, may comprise one or more terms, which may for example be combined, in particular by a weighted summation, to form the objective function. One of the one or more terms depends on the denoised high-frequency dataset and the high-frequency dataset of the second imaging dataset, in particular a deviation between the denoised high-frequency dataset and the high-frequency dataset of the second imaging dataset. The deviation may for example be quantified as an L1-norm or an L2-norm or another suitable measure.

It is noted that the denoising algorithm is not or at least not necessarily pre-trained. In particular, it is not necessary that the denoising algorithm is trained based on any training images before it is trained implicitly or inherently for denoising the high-frequency dataset of the first imaging dataset within the computer-implemented method according to the invention. In other words, the training phase and to the application phase of the denoising algorithm are not separated. Consequently, the denoising algorithm is trained again each time the computer-implemented method is carried out.

The optimization is, in particular, carried out iteratively in two or more iterations comprising an initial iteration and a final iteration. For each iteration, a respective current value for the optimization variables, in particular for the at least one parameter of the denoising algorithm, is set, the resulting current version of the denoising algorithm is applied to the high-frequency dataset of the first imaging dataset, and the objective function is evaluated accordingly. For the next iteration, the respective values for the optimization variables may be varied or set based on a result of the evaluated objective function. The number of the two or more iterations may be predefined. Alternatively, it may be determined in each iteration whether the result of the evaluated objective function fulfills a predefined termination criterion. The iterations are then carried out until the termination criterion is fulfilled. The trained denoising algorithm corresponds to the denoising algorithm with the at least one parameter of the denoising algorithm as defined in the final iteration of the two or more iterations. Consequently, the final denoised high-frequency dataset corresponds, in particular, to the denoising algorithm used in the final iteration.

According to several embodiments, the optimization comprises generating, in particular in each of the iterations or during a subset of the iterations, a first recombined dataset based on the low-frequency dataset of the first imaging dataset and the denoised high-frequency dataset. The objective function depends on the first recombined dataset and the first imaging dataset.

In particular, the first recombined dataset may be computed based on the non-denoised low-frequency dataset of the first imaging dataset. In particular, a second term of the one or more terms of the objective function depends on the first recombined dataset and the first imaging dataset, in particular a deviation between the first recombined dataset and the first imaging dataset. The second term may for example be a content-based or content-sensitive loss term, a VGG-loss term, a structural similarity index, SSIM, loss term, a multiscale SSIM, MSSIM, loss term, or a mean-squared error loss term, for example.

In such embodiments, the second term of the objective function ensures that the general image impression and intensity after the denoising is not fundamentally different from the first imaging dataset. Since the second term of the objective function tends to drive the denoising algorithm towards an identity mapping, it may for example be weighted with a relatively low weight or it may be only applied during every second iteration of the optimization or another subset of the iteration.

For generating the first recombined dataset, the decomposition is for example inverted, wherein, however, instead of the high-frequency dataset of the first imaging dataset come on the denoised high-frequency dataset is used.

According to several embodiments, the objective function depends on the deviation of the denoised high-frequency dataset from the high-frequency dataset of the second imaging dataset.

In particular, the first term of the objective function depends on or consists of the deviation of the denoised high-frequency dataset from the high-frequency dataset of the second imaging dataset. Consequently, a reduced computational effort may be achieved. It is noted that the high-frequency dataset of the second imaging dataset does in general comprise noise, which is, however, uncorrelated or approximately uncorrelated with the noise of the high-frequency dataset of the first imaging dataset. It is therefore feasible to compute the first term of the objective function based on the denoised high-frequency dataset and the non-denoised high-frequency dataset of the second imaging dataset.

According to several embodiments, the optimization comprises, in particular in each of the iterations or during a subset of the iterations, generating a reference high-frequency dataset by applying the denoising algorithm to the high-frequency dataset of the second imaging dataset. The objective function depends on a deviation of the denoised high-frequency dataset from the reference high-frequency dataset.

In particular, in a given iteration, the same version of the denoising algorithm with the same parameters is applied to the high-frequency dataset of the first imaging dataset and to the high-frequency dataset of the second imaging dataset.

In particular, the first term of the objective function depends on or consists of the deviation of the denoised high-frequency dataset from the reference high-frequency dataset. Consequently, effects of the denoising algorithms are present in both datasets used for computing the first term. In this way, it is avoided that the first term of the objective function indicates a too high deviation than justified, since the deviation may in part origin from a successful denoising.

According to several embodiments, in particular in each of the iterations or during a subset of the iterations, the objective function depends on a further denoised high-frequency dataset and the high-frequency dataset of the first imaging dataset, wherein the further denoised high-frequency dataset is generated by applying the denoising algorithm to the high-frequency dataset of the second imaging dataset. The trained denoising algorithm is applied to the high-frequency dataset of the second imaging dataset to generate a further final denoised high-frequency dataset.

In particular, further denoised high-frequency dataset is identical to the reference high-frequency dataset in the previously discussed embodiments, but they are used for different purposes. While the reference high-frequency dataset is used to compute the first term of the objective function and eventually to generate the final denoised high-frequency dataset, the further denoised high-frequency dataset is used to compute a third term of the objective function and eventually to generate the further final denoised high-frequency dataset.

In particular, in a given iteration, the same version of the denoising algorithm with the same parameters is applied to the high-frequency dataset of the first imaging dataset and to the high-frequency dataset of the second imaging dataset.

In particular, the third term of the objective function depends on or consists of the deviation of the further denoised high-frequency dataset and the high-frequency dataset of the first imaging dataset. Consequently, the explanations and advantages explained with respect to the final denoised high-frequency dataset and the process to generate it can be carried over analogously to the further final denoised high-frequency dataset and the process to generate it.

As a consequence, in such embodiments, the final denoised high-frequency dataset and the further final denoised high-frequency dataset are generated by applying the same version of the trained denoising algorithm. This is particularly beneficial for applications where the final denoised high-frequency dataset and the further final denoised high-frequency dataset or the respective recombined imaging datasets are further processed together, for example subtracted from each other. By using the same version of the trained denoising algorithm, it may for example be achieved that effects or artifacts generated by the denoising algorithms cancel out.

Further embodiments of the computer-implemented method follow analogously.

For example, in some embodiments, the optimization comprises, in particular in each of the iterations or during a subset of the iterations, generating a second recombined dataset based on the low-frequency dataset of the second imaging dataset and the further denoised high-frequency dataset. The objective function, for example a fourth term of the objective function, depends on the second recombined dataset and the second imaging dataset, in particular a deviation of the second recombined dataset from the second imaging dataset.

For example, in some embodiments, the objective function, for example the third term of the objective function, depends on a deviation of the further denoised high-frequency dataset from the high-frequency dataset of the first imaging dataset.

For example, in some embodiments, the optimization comprises in particular in each of the iterations or during a subset of the iterations, generating a further reference high-frequency dataset by applying the denoising algorithm to the high-frequency dataset of the first imaging dataset. The objective function, for example the third term of the objective function, depends on a deviation of the further denoised high-frequency dataset from the further reference high-frequency dataset.

According to several embodiments, the objective function depends on a deviation of the denoised high-frequency dataset from the further denoised high-frequency dataset.

In particular, a fifth term of the objective function depends on or consists of the deviation of the denoised high-frequency dataset from the further denoised high-frequency dataset. Consequently, a consistent denoising of the high-frequency datasets of the first and the second imaging dataset is achieved.

According to several embodiments, a trainable further denoising algorithm is trained by carrying out a further optimization which uses at least one parameter of the further denoising algorithm as at least one further optimization variable and a further objective function, which depends on a further denoised high-frequency dataset and the high-frequency dataset of the second imaging dataset, for example a respective deviation. The further denoised high-frequency dataset is generated by applying the further denoising algorithm to the high-frequency dataset of the second imaging dataset. The trained further denoising algorithm is applied to the high-frequency dataset of the second imaging dataset to generate a further final denoised high-frequency dataset.

The further denoising algorithm may in principle be the same as the denoising algorithm, but they are trained independently from each other. The further denoising algorithm may also be different from the denoising algorithm. In other words, the denoising of the high-frequency datasets of the first and the second imaging dataset are computed independently.

According to several embodiments, the first imaging dataset comprises a first two-dimensional X-ray image and/or the second imaging dataset comprises a second two-dimensional X-ray image.

According to several embodiments, the first imaging dataset comprises a first three-dimensional X-ray-based image reconstruction and/or the second imaging dataset comprises a second three-dimensional X-ray-based image reconstruction.

According to several embodiments, the first imaging parameter set specifies a first energy spectrum and/or the second imaging parameter set specifies a second energy spectrum, which is different from the first energy spectrum.

The first and the second energy spectrum are, in particular, energy spectra generated by the X-ray source or detected by the X-ray detector.

According to several embodiments, the decomposition comprises a Fourier decomposition of the first imaging dataset and/or a Fourier decomposition of the second imaging dataset.

In this way, fast and reliable Decomposition is achievable. The Fourier decomposition comprises, for example, a Fourier transformation of the respective imaging dataset from the image domain into the frequency domain, a separation of the resulting frequency data, and an inverse Fourier transformation of the individual separated parts.

According to several embodiments, the decomposition comprises a Laplace decomposition of the first imaging dataset and/or a Laplace decomposition of the second imaging dataset.

The explanations regarding the Fourier decomposition hold analogously, wherein the Fourier transformation and inverse Fourier transformation are replaced by the Laplace transformation and inverse Laplace transformation, respectively.

According to several embodiments, the decomposition comprises a wavelet decomposition of the first imaging dataset and/or a wavelet decomposition of the second imaging dataset.

The explanations regarding the Fourier decomposition hold analogously, wherein the Fourier transformation and inverse Fourier transformation are replaced by the wavelet transformation and inverse wavelet transformation, respectively.

According to several embodiments, the decomposition comprises a spline decomposition of the first imaging dataset and/or a spline decomposition of the second imaging dataset.

The explanations regarding the Fourier decomposition hold analogously, wherein the Fourier transformation and inverse Fourier transformation are replaced by the spline transformation, in particular B-spline transformation, and inverse spline transformation, in particular inverse B-spline transformation, respectively.

According to several embodiments, the two or more spatial frequency bands are predefined.

The overall computational effort is therefore reduced.

According to several embodiments, the decomposition is carried out according to at least one decomposition parameter and the optimization uses the at least one decomposition parameter as at least one further optimization variable.

In particular, the at least one decomposition parameter defines the two or more spatial frequency bands. Consequently, the optimal decomposition, in particular the optimal choice of frequency bands, is trained individually for the given first imaging dataset and, if applicable, the given second imaging dataset. Therefore, the performance of the denoising may be improved.

According to several embodiments, the denoising algorithm comprises an artificial neural network, ANN.

In particular, that at least one parameter of the denoising algorithm comprises a plurality of weighting factors of the ANN in such embodiments. Such embodiments are particularly beneficial, since well-established methods for adapting or updating weighting factors of an ANN, in particular the backpropagation algorithm, provide a powerful framework for using the ANN in an implicit manner in the computer-implemented method according to the invention.

The ANN may for example be or comprise a deep neural network, a convolutional neural network, or a convolutional deep neural network. Furthermore, the ANN may be or comprise an adversarial network, a deep adversarial network and/or a generative adversarial network, GAN.

According to several embodiments, the ANN is or comprises a U-Net or is based on a U-Net.

According to several embodiments, the ANN is or comprises a Noise2Noise network.

According to several embodiments, the denoising algorithm comprises a Gaussian filter and/or a bilateral filter, in particular a joint bilateral filter or a guided filter.

In particular, that at least one parameter of the denoising algorithm may for example comprise a smoothing parameter, also denoted as width or standard deviation in some cases. Consequently, the denoising is particularly simple from a computational point of view. For the more common the number of required iterations in the optimization may be reduced.

According to a further aspect of the invention, a computer-implemented method for material sensitive medical imaging is provided. Therein, a computer-implemented method for denoising medical imaging data according to the invention is carried out. At least one material-specific imaging dataset, including for example a virtual non-contrast image and/or a contrast image, for example an iodine map, is generated depending on the final denoised high-frequency dataset.

In particular, at least one material-specific imaging dataset is generated depending on the recombined first imaging dataset and the recombined second imaging dataset. For example generating the least one material-specific imaging dataset comprises subtracting the recombined first imaging dataset and the recombined second imaging dataset from each other.

According to a further aspect of the invention, a data processing system is provided. The data processing system is configured to carry out a computer-implemented method according to the invention.

In particular, the data processing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said units.

In various embodiments, the data processing device includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, a medical imaging system is provided. The medical imaging device comprises a data processing system according to the invention and a medical imaging system, which is configured to generate the first imaging dataset and the second imaging dataset.

The medical imaging device may for example be an X-ray imaging device, a C-arm X-ray imaging device, a CBCT device, a CT device, a photon counting CT device or an MRI device.

Further embodiments of the medical imaging system according to the invention follow directly from the various embodiments of the computer-implemented methods according to the invention and vice versa. In particular, individual features and corresponding explanations as well as advantages relating to the various implementations of the computer-implemented methods according to the invention can be transferred analogously to corresponding implementations of the medical imaging system according to the invention. In particular, the medical imaging system according to the invention is designed or programmed to carry out a computer-implemented method according to the invention. In particular, the medical imaging system according to the invention carries out a computer-implemented method according to the invention.

According to a further aspect of the invention, a computer program comprising instructions is provided. When the instructions are executed by a data processing system, the instructions cause the data processing system to carry out a computer-implemented method according to the invention.

The instructions may be provided as program code, for example. The program code can for example be provided as binary code or assembler and/or as source code of a programming language, for example C, and/or as program script, for example Python.

According to a further aspect of the invention, a computer-readable storage medium storing a computer program according to the invention is provided.

The computer program and the computer-readable storage medium are respective computer program products comprising the instructions.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,

FIG 1    shows schematically and exemplary embodiment of a medical imaging system according to the invention;

FIG 2    shows a schematic flow diagram of an exemplary embodiment of a computer-implemented method for denoising medical imaging data according to the invention;

FIG 3    shows a schematic flow diagram of a further exemplary embodiment of a computer-implemented method for denoising medical imaging data according to the invention;

FIG 4    shows a schematic flow diagram of a further exemplary embodiment of a computer-implemented method for denoising medical imaging data according to the invention;

FIG 5    shows a schematic flow diagram of a further exemplary embodiment of a computer-implemented method for denoising medical imaging data according to the invention;

FIG 6    shows a schematic flow diagram of a further exemplary embodiment of a computer-implemented method for denoising medical imaging data according to the invention;

FIG 7    shows schematically an artificial neural network;

FIG 8    shows schematically a convolutional neural network; and

FIG 9    shows schematically a further convolutional neural network.

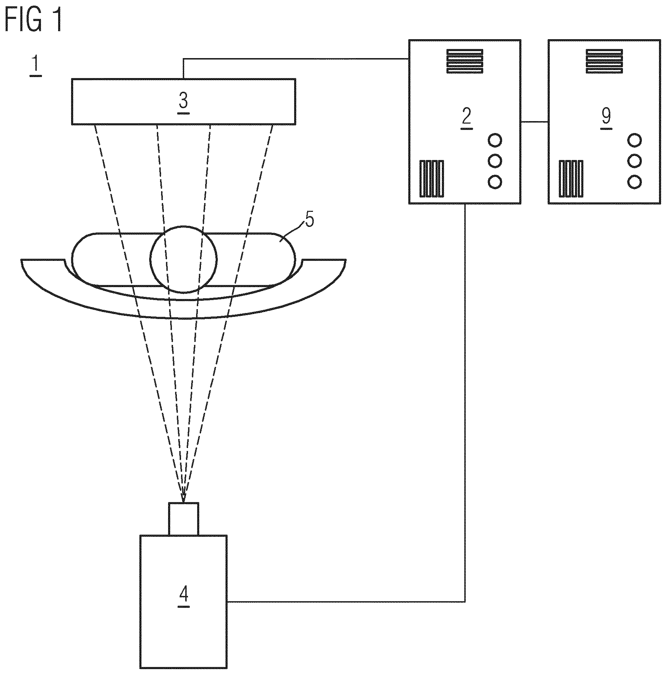

FIG 1 shows schematically an exemplary embodiment of a medical imaging system 1, which is, in particular, implemented as an X-ray imaging system 1. The X-ray imaging system 1 comprises a source unit 3 with an X-ray source, a detector unit 4 with an X-ray detector, and a control system 2, which is configured to control the X-ray source and the X-ray detector to generate X-ray images depicting an object 5, for example a patient. The X-ray imaging system 1 is, for example, capable of generating energy generate X-ray images according to different energy domains, for example by using different X-ray spectra.

The X-ray imaging system 1 may for example comprise a patient table, on which the object 5 is arranged. The X-ray imaging system 1 further comprises a data processing system 9 according to the invention, which is adapted to carry out a computer-implemented method for denoising medical imaging data according to the invention. In the following, several functions and method steps may be described to be carried out by the control system 2, while other functions and method steps are described to be carried out by the data processing system 9. It is noted that the functions and method steps may also be distributed in different ways in alternative implementations. In some embodiments, the data processing system 9 may comprise the control system 2 or parts of it.

For example, the control system 7 may adjust various imaging parameters of the X-ray imaging system 1 including, for example, exposure parameters like a peak kilovoltage of the X-ray source, a tube current of the X-ray source, and/or an X-ray pulse duration. For example, the control system 7 may adjust further imaging parameters like a filter material and/or filter thickness of an X-ray filter, for example a copper filter, by placing the appropriate X-ray filter into the beam path or by removing it from the beam path, respectively. For example, the control system 7 may adjust further imaging parameters like a collimator opening size of an X-ray collimator. For example, the control system 7 may bring the X-ray collimator into the beam path or by remove it from the beam path, respectively. For example, the control system 7 may adjust further imaging parameters like a gain factor of the X-ray detector. For example, the control system 7 may bring an anti-scattering grid into the beam path or by remove it from the beam path, respectively.

The X-ray imaging system 1 may also be implemented as a C-arm system, a CBCT system or a CT system, for example.

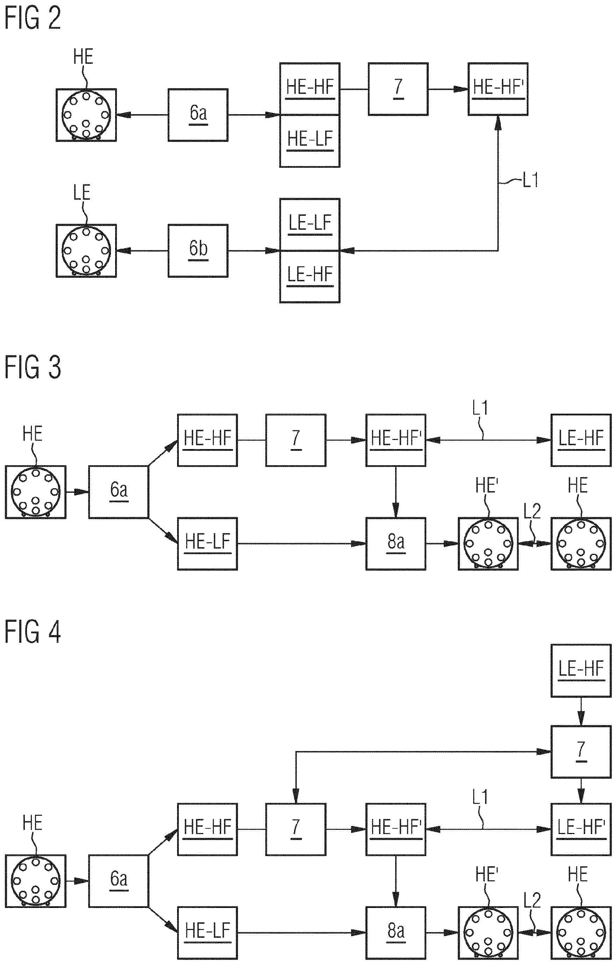

FIG 2 shows a schematic flow diagram of an exemplary embodiment of a computer-implemented method for denoising medical imaging data according to the invention, which may be carried out, for example, by the data processing system 9 of the medical imaging system one of FIG1.

A first imaging dataset HE depicting the object 5 and a second imaging dataset LE generated according to a second imaging parameter set depicting the object 5 are received. The first imaging dataset HE and the second imaging dataset LE are for example generated by the X-ray imaging system 1 with different energy spectra being used, in particular a high energy spectrum for the first imaging dataset HE and a low energy spectrum for the second imaging dataset LE.

The first imaging dataset HE and the second imaging dataset LE may be pre-processed prior to the decomposition, the pre-processing comprising, for example, a logarithmic transformation and/or a correction of further physical effects, for example beam-hardening or scattering.

The first imaging dataset HE and the second imaging dataset LE are decomposed individually according to two or more spatial frequency bands. The decomposition 6a of the first imaging dataset HE comprises generating a high-frequency dataset of the first imaging dataset HE-HF corresponding to a high-frequency band of the two or more spatial frequency bands and a low-frequency dataset of the first imaging dataset HE-LF corresponding to a low-frequency band of the two or more spatial frequency bands. The decomposition 6b of the second imaging dataset LE comprises generating a high-frequency dataset of the second imaging dataset LE-HF corresponding to the high-frequency band and a low-frequency dataset of the second imaging dataset LE-LF corresponding to the low-frequency band.

A trainable denoising algorithm 7 is trained by carrying out an optimization, which uses at least one parameter of the denoising algorithm 7 as optimization variable and an objective function, which comprises a first term L1 depending on a denoised high-frequency dataset HE-HF' and the high-frequency dataset of the second imaging dataset LE-HF. The denoised high-frequency dataset HE-HF' is generated by applying the denoising algorithm 7 to the high-frequency dataset of the first imaging dataset HE-HF.

The first term L1 of the loss function ensures that the correlated high-frequency features such as edges are preserved while the uncorrelated noise is removed or reduced. For example, the denoised high-frequency dataset HE-HF' and the low-frequency dataset of the first imaging dataset HE-LF may be recombined by inverting the frequency decomposition 6a to yield a recombined first imaging dataset HE'.

The optimization may for example be carried out in several iterations until the objective function has converged. The trained denoising algorithm 7 is applied to the high-frequency dataset of the first imaging dataset HE-HF to generate a final denoised high-frequency dataset HE-HF'.

For example, the denoising algorithm 7 may be implemented as an ANN, for example a Noise2Noise network. In some embodiments, the ANN may, however, be exchanged with or extended by trainable guided filter or a joint bilateral filter.

Possible methods for the frequency transform used for the decompositions 6a, 6b include but are not limited to a Fourier transform with frequency thresholding, a Laplace transform, a Wavelet transform, a B-spline transform, et cetera.

In some embodiments, the frequency transform may be performed hierarchically to separate multiple frequency bands. In this way, the terms of the objective function corresponding to different high-frequency bands may be weighted proportional to the frequency.

In some embodiments, the frequency transform may also be included into the training procedure for online calibration of, for example, the frequency thresholds.

In some embodiments, the same method steps may be applied analogously to the second imaging dataset LE.

In some embodiments, during the iterations of the optimization, the high-energy and low-energy data may for example be alternately interchanged as inputs and labels to denoise both data simultaneously.

In some embodiments, the effect of the denoising algorithm 7 a may be constrained to a physically expected variance of the noise, for example using a noise gate.

FIG 3 shows a schematic flow diagram of a further exemplary embodiment of a computer-implemented method for denoising medical imaging data according to the invention, which is based on the embodiment of FIG 2.

In this embodiment, the optimization comprises generating the first recombined dataset HE' based on the low-frequency dataset of the first imaging dataset HE-LF and the denoised high-frequency dataset HE-HF' as indicated by a recombination module 8a. A second term L2 of the objective function depends on the first recombined dataset HE' and the first imaging dataset HE.

The second term L2 ensures that the general image impression and intensity after the denoising is not fundamentally different from the initial data. Suitable losses include content-based or content-sensitive losses, such as VGG-loss, structural similarity index, multiscale structural similarity index, or conventional losses such as the mean-squared error. Since the second term L2 would approximately be optimal for a denoising algorithm 7 learning the identity, it may for example be weighted with a relatively low weight or only applied during, for example, every second iteration of the optimization.

FIG 4 shows a schematic flow diagram of a further exemplary embodiment of a computer-implemented method for denoising medical imaging data according to the invention, which is based on the embodiment of FIG 3.

In this embodiment, the optimization comprises generating a reference high-frequency dataset LE-HF' by applying the same denoising algorithm 7 as applied to the high-frequency dataset of the first imaging dataset HE-HF also to the high-frequency dataset of the second imaging dataset LE-HF in each iteration. In other words, the denoising algorithms 7 have shared parameters, for example shared weights in case of an ANN. The first term L1 of the objective function then depends on a deviation of the denoised high-frequency dataset HE-HF' from the reference high-frequency dataset LE-HF'.

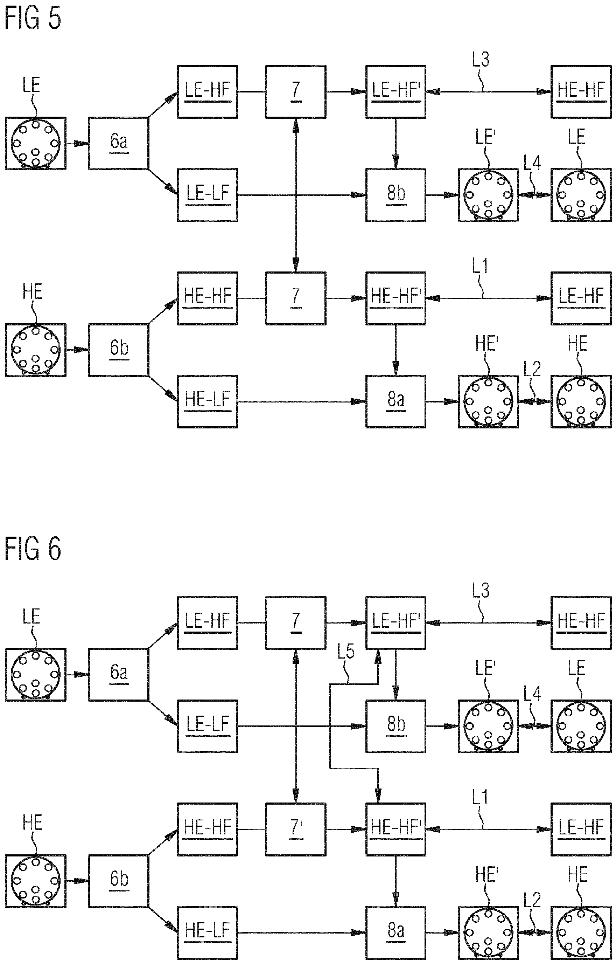

FIG 5 shows a schematic flow diagram of a further exemplary embodiment of a computer-implemented method for denoising medical imaging data according to the invention, which is based on the embodiment of FIG 2.

In this embodiment, a third term L3 of the objective function depends on a further denoised high-frequency dataset LE-HF' and the high-frequency dataset of the first imaging dataset HE-HF, wherein the further denoised high-frequency dataset LE-HF' is generated by applying the same denoising algorithm 7 as applied to the high-frequency dataset of the first imaging dataset HE-HF also to the high-frequency dataset of the second imaging dataset LE-HF in each iteration. In other words, the denoising algorithms 7 have shared parameters, for example shared weights in case of an ANN. The trained denoising algorithm 7 is applied to the high-frequency dataset of the second imaging dataset LE-HF to generate a further final denoised high-frequency dataset LE-HF'.

In particular, all energy bins are denoised simultaneously in such embodiments. The illustration of FIG 5 shows the application to two energy bins, namely high-energy and low-energy. However, the method may be applied to any number of energy bins analogously. In case more than two energy bins are considered, the first term L1 may for example be computed with respect to all other energy bins in some embodiments.

Optionally, the second term L2 of the objective function may be used additionally as described with respect to FIG 3.

Also optionally, the optimization may comprise generating the second recombined dataset LE' based on the low-frequency dataset of the second imaging dataset LE-LF and the further denoised high-frequency dataset LE-HF', as indicated by a further recombination module 8b. A fourth term L4 of the objective function depends on the second recombined dataset LE' and the second imaging dataset LE.

FIG 6 shows a schematic flow diagram of a further exemplary embodiment of a computer-implemented method for denoising medical imaging data according to the invention, which is based on the embodiment of FIG 5.

In this embodiment, a fifth term L5 of the objective function depends on a deviation of the denoised high-frequency dataset HE-HF' from the further denoised high-frequency dataset LE-H F'.

As explained, in particular with reference to the figures, the improved concept according to the invention allows for an effective denoising without losing potentially relevant details but also without requiring training images and correspondingly annotated ground truth images. In particular, the invention effectively utilizes a data-specific denoising algorithm.

In some embodiments, an implicit ANN is used to suppress noise but preserve details in spectral X-ray imaging data, in particular two-dimensional projection images or three-dimensional CT reconstructions. In particular, the performance of ANN architectures is exploited without the need of training data. Due to the inherent parallelizability of ANNs, the computational steps may be carried out particularly fast.

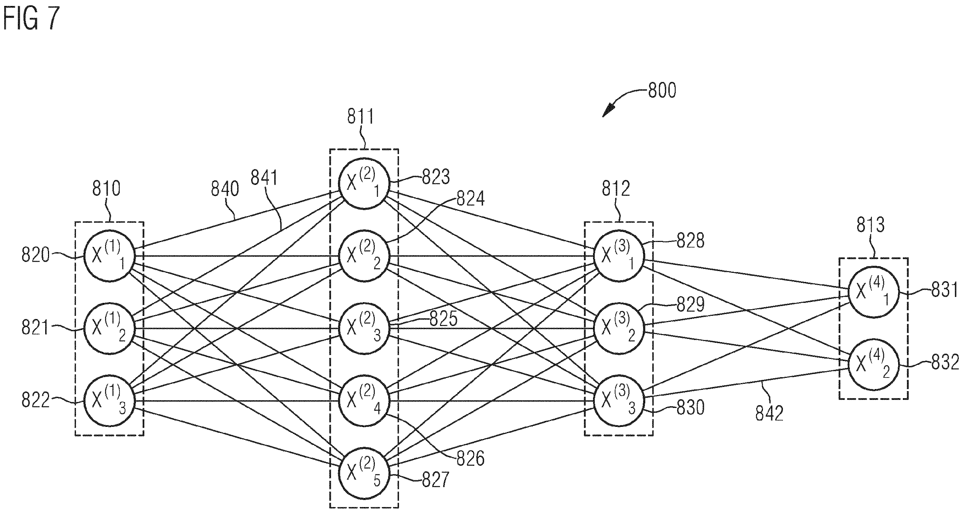

FIG 7 displays an embodiment of an ANN 800, which is for example designed as an MLP. The ANN 800 comprises nodes 820, ... , 832 and edges 840, ... , 842, wherein each edge 840, ... , 842 is a directed connection from a first node 820, ..., 832 to a second node 820, ... , 832. In general, the first node 820, ... , 832 and the second node 820, ... , 832 are different nodes 820, ..., 832. It is, however, also possible that the first node 820, ... , 832 and the second node 820, ..., 832 are identical. For example, in FIG 7, the edge 840 is a directed connection from the node 820 to the node 823, and the edge 842 is a directed connection from the node 830 to the node 832. An edge 840, ... , 842 from a first node 820, ... , 832 to a second node 820, ..., 832 is also denoted as ingoing edge for the second node 820, ... , 832 and as outgoing edge for the first node 820, ..., 832.

In this example, the nodes 820, ... , 832 of the artificial neural network 800 can be arranged in layers 810, ... , 813, wherein the layers can comprise an intrinsic order introduced by the edges 840, ... , 842 between the nodes 820, ... , 832. In particular, edges 840, ... , 842 can exist only between neighboring layers of nodes. In the displayed example, there is an input layer 810 comprising only nodes 820, ... , 822 without an incoming edge, an output layer 813 comprising only nodes 831, 832 without outgoing edges, and hidden layers 811, 812 in-between the input layer 810 and the output layer 813. In general, the number of hidden layers 811, 812 can be chosen arbitrarily. In an MLP, this number is at least one. The number of nodes 820, ..., 822 within the input layer 810 usually relates to the number of input values of the artificial neural network 800, and the number of nodes 831, 832 within the output layer 813 usually relates to the number of output values of the artificial neural network 800.

In particular, a real number can be assigned as a value to every node 820, ... , 832 of the artificial neural network 800. Here, $x^{(n)}_i$ denotes the value of the i-th node 820, ... , 832 of the n-th layer 810, ... , 813. The values of the nodes 820, ... , 822 of the input layer 810 are equivalent to the input values of the artificial neural network 800. The values of the nodes 831, 832 of the output layer 813 are equivalent to the output value of the artificial neural network 800. Furthermore, each edge 840, ... , 842 can comprise a weight being a real number. In particular, the weight is a real number within the interval [-1, 1] or within the interval [0, 1]. Here, $w^{(m,n)}_{i,j}$ denotes the weight of the edge between the i-th node 820, ... , 832 of the m-th layer 810, ... , 813 and the j-th node 820, ... , 832 of the n-th layer 810, ... , 813. Furthermore, the abbreviation $w^{(n)}_{i,j}$ is defined for the weight $w^{(n,n+1)}_{i,j}$. In particular, to calculate the output values of the neural network 800, the input values are propagated through the neural network 800. In particular, the values of the nodes 820, ... , 832 of the (n+1)-th layer 810, ..., 813 can be calculated based on the values of the nodes 820, ... , 832 of the n-th layer 810, ..., 813 by

$$x_j^{(n+1)} = f\left(\sum_i x_i^{(n)}\, w_{i,j}^{(n)}\right).$$

Herein, the function f is denoted as transfer function or activation function. Known transfer functions are step functions, the sigmoid functions, for example the logistic function, the generalized logistic function, the hyperbolic tangent, the arctangent function, the error function, the smoothstep function, or rectifier functions. The transfer function is for example used for normalization purposes. In particular, the values are propagated layer-wise through the neural network 800, wherein values of the input layer 810 are given by the input of the neural network 800, wherein values of the first hidden layer 811 can be calculated based on the values of the input layer 810 of the neural network 800, wherein values of the second hidden layer 812 can be calculated based on the values of the first hidden layer 811, and so forth.

In order to set the values $w^{(m,n)}_{i,j}$ for the edges, the neural network 800 has to be trained using training data. In particular, training data comprises training input data and training output data (denoted as $t_i$). For a training step, the neural network 800 is applied to the training input data to generate calculated output data. In particular, the training data and the calculated output data comprise a number of values, said number being equal with the number of nodes of the output layer. In particular, a comparison between the calculated output data and the training data is used to recursively adapt the weights within the neural network 800 (backpropagation algorithm). In particular, the weights are changed according to

$$w_{i,j}^{\prime(n)} = w_{i,j}^{(n)} - \gamma\, \delta_j^{(n)}\, x_i^{(n)},$$

wherein $\gamma$ is a predefined learning rate, and the numbers $\delta^{(n)}_j$ can be recursively calculated as

$$\delta_j^{(n)} = \left(\sum_k \delta_k^{(n+1)}\, w_{j,k}^{(n+1)}\right) f'\left(x_i^{(n)} w_{i,j}^{(n)}\right)$$

based on $\delta^{(n+1)}_j$, if the (n+1)-th layer is not the output layer 813, and

$$\delta_j^{(n)} = \left(x_j^{(n+1)} - t_j^{(n+1)}\right)\, f'\left(x_i^{(n)} w_{i,j}^{(n)}\right),$$

if the (n+1)-th layer is the output layer 813, wherein f' is the first derivative of the activation function, and $t^{(n+1)}_j$ is the comparison training value for the j-th node of the output layer 813.

A convolutional neural network, CNN, is an ANN that uses a convolution operation instead of general matrix multiplication in at least one of its layers. These layers are denoted as convolutional layers. In particular, a convolutional layer performs a dot product of one or more convolution kernels with the convolutional layer's input data, wherein the entries of the one or more convolution kernel are parameters or weights that may be adapted by training. In particular, one can use the Frobenius inner product and the ReLU activation function. A convolutional neural network can comprise additional layers, for example pooling layers, fully connected layers, and/or normalization layers.

By using convolutional neural networks, the input can be processed in a very efficient way because a convolution operation based on different kernels can extract various image features so that by adapting the weights of the convolution kernel the relevant image features can be found during training. Furthermore, based on the weight-sharing in the convolutional kernels fewer parameters need to be trained, which prevents overfitting in the training phase and allows to have faster training or more layers in the network, improving the performance of the network.

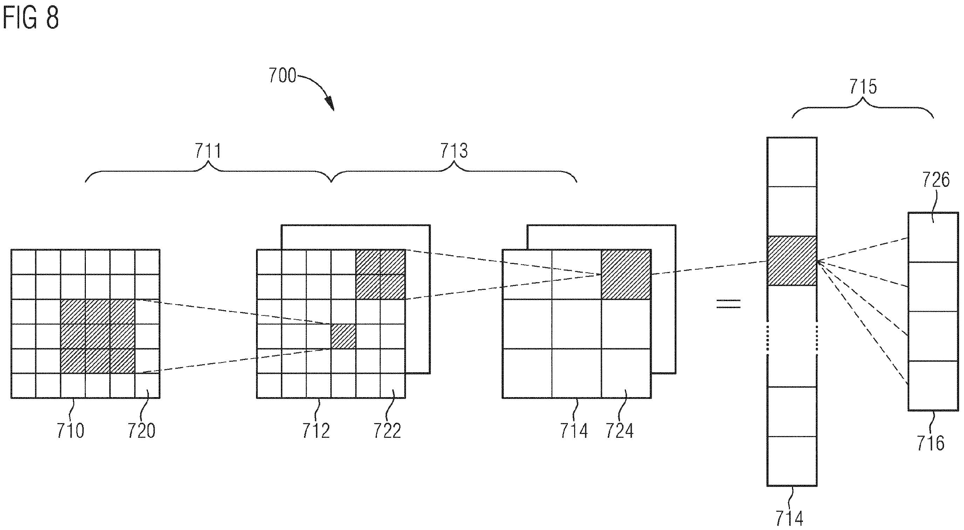

FIG 8 displays an exemplary embodiment of a convolutional neural network 700. In the displayed embodiment, the convolutional neural network 700 comprises an input node layer 710, a convolutional layer 711, a pooling layer 713, a fully connected layer 714 and an output node layer 716, as well as hidden node layers 712, 714. Alternatively, the convolutional neural network 200 can comprise several convolutional layers 711, several pooling layers 713 and/or several fully connected layers 715, as well as other types of layers. The order of the layers can be chosen arbitrarily, usually fully connected layers 715 are used as the last layers before the output layer 716.

In particular, within a convolutional neural network 700 nodes 720, 722, 724 of a node layer 710, 712, 714 can be considered to be arranged as a d-dimensional matrix or as a d-dimensional image. In particular, in the two-dimensional case the value of the node 720, 722, 724 indexed with i and j in the n-th node layer 710, 712, 714 can be denoted as x(n)[i, j]. However, the arrangement of the nodes 720, 722, 724 of one node layer 710, 712, 714 does not have an effect on the calculations executed within the convolutional neural network 700 as such, since these are given solely by the structure and the weights of the edges.

A convolutional layer 711 is a connection layer between an anterior node layer 710 with node values x(n-1) and a posterior node layer 712 with node values x(n). In particular, a convolutional layer 711 is characterized by the structure and the weights of the incoming edges forming a convolution operation based on a certain number of kernels. In particular, the structure and the weights of the edges of the convolutional layer 711 are chosen such that the values x(n) of the nodes 722 of the posterior node layer 712 are calculated as a convolution x(n) = K * x(n-1) based on the values x(n-1) of the nodes 720 anterior node layer 710, where the convolution * is defined in the two-dimensional case as

$$x^{(n)}[i,j] = \left(K * x^{(n-1)}\right)[i,j] = \sum_{i'}\sum_{j'} K[i',j'] \cdot x^{(n-1)}[i-i', j-j'].$$

Herein, the kernel K is a d-dimensional matrix, in the present example a two-dimensional matrix, which is usually small compared to the number of nodes 720, 722, for example a 3x3 matrix, or a 5x5 matrix. In particular, this implies that the weights of the edges in the convolution layer 711 are not independent, but chosen such that they produce said convolution equation. In particular, for a kernel being a 3x3 matrix, there are only 9 independent weights, each entry of the kernel matrix corresponding to one independent weight, irrespectively of the number of nodes 720, 722 in the anterior node layer 710 and the posterior node layer 712.

In general, convolutional neural networks 700 use node layers 710, 712, 714 with a plurality of channels, in particular, due to the use of a plurality of kernels in convolutional layers 711. In those cases, the node layers can be considered as (d+1)-dimensional matrices, the first dimension indexing the channels. The action of a convolutional layer 711 is then in a two-dimensional example defined as

$$x_b^{(n)}[i,j] = \sum_a (K_{a,b} * x_a^{(n-1)}[i,j]) = \sum_a \sum_{i'} \sum_{j'} K_{a,b}[i',j'] \cdot x_a^{(n-1)}[i-i',j-j'],$$

wherein $x_a^{(n)}$ corresponds to the a-th channel of the anterior node layer 710, $x_b^{(n)}$ corresponds to the b-th channel of the posterior node layer 712 and $K_{a,b}$ corresponds to one of the kernels. If a convolutional layer 711 acts on an anterior node layer 710 with A channels and outputs a posterior node layer 712 with B channels, there are A·B independent d-dimensional kernels $K_{a,b}$.

In general, in convolutional neural networks 700 activation functions may be used. In this embodiment, ReLU (rectified linear unit) is used, with R(z) = max(0, z), so that the action of the convolutional layer 711 in the two-dimensional example is

$$x_b^{(n)}[i,j] = R\left(\sum_a (K_{a,b} * x_a^{(n-1)}[i,j])\right) = R\left(\sum_a \sum_{i'} \sum_{j'} K_{a,b}[i',j'] \cdot x_a^{(n-1)}[i-i',j-j']\right).$$

It is also possible to use other activation functions, for example ELU (exponential linear unit), LeakyReLU, Sigmoid, Tanh or Softmax.

In the displayed embodiment, the input layer 710 comprises 36 nodes 720, arranged as a two-dimensional 6x6 matrix. The first hidden node layer 712 comprises 72 nodes 722, arranged as two two-dimensional 6x6 matrices, each of the two matrices being the result of a convolution of the values of the input layer with a 3x3 kernel within the convolutional layer 711. Equivalently, the nodes 722 of the first hidden node layer 712 can be interpreted as arranged as a three-dimensional 2x6x6 matrix, wherein the first dimension correspond to the channel dimension.

An advantage of using convolutional layers 711 is that spatially local correlation of the input data can exploited by enforcing a local connectivity pattern between nodes of adjacent layers, in particular by each node being connected to only a small region of the nodes of the preceding layer.

A pooling layer 713 is a connection layer between an anterior node layer 712 with node values x(n-1) and a posterior node layer 714 with node values x(n). In particular, a pooling layer 713 can be characterized by the structure and the weights of the edges and the activation function forming a pooling operation based on a non-linear pooling function f. For example, in the two-dimensional case the values x(n) of the nodes 724 of the posterior node layer 714 can be calculated based on the values x(n-1) of the nodes 722 of the anterior node layer 712 as

$$x_b^{(n)}[i,j] = f\left(x_b^{(n-1)}[id_1,jd_2], \dots, \quad x_b^{(n-1)}[(i+1)d_1-1,(j+1)d_2-1]\right).$$

In other words, by using a pooling layer 713, the number of nodes 722, 724 can be reduced by re-placing a number d1 d2 of neighboring nodes 722 in the anterior node layer 712 with a single node 722 in the posterior node layer 714 being calculated as a function of the values of said number of neighboring nodes. In particular, the pooling function f can be the max-function, the average or the L2-Norm. In particular, for a pooling layer 713 the weights of the incoming edges are fixed and are not modified by training.

The advantage of using a pooling layer 713 is that the number of nodes 722, 724 and the number of parameters is reduced. This leads to the amount of computation in the network being reduced and to a control of overfitting.

In the displayed embodiment, the pooling layer 713 is a max-pooling layer, replacing four neighboring nodes with only one node, the value being the maximum of the values of the four neighboring nodes. The max-pooling is applied to each d-dimensional matrix of the previous layer. In this embodiment, the max-pooling is applied to each of the two two-dimensional matrices, reducing the number of nodes from 72 to 18.

In general, the last layers of a convolutional neural network 700 may be fully connected layers 715. A fully connected layer 715 is a connection layer between an anterior node layer 714 and a posterior node layer 716. A fully connected layer 713 can be characterized by the fact that a majority, in particular, all edges between nodes 714 of the anterior node layer 714 and the nodes 716 of the posterior node layer are present, and wherein the weight of each of these edges can be adjusted individually.

In this embodiment, the nodes 724 of the anterior node layer 714 of the fully connected layer 715 are displayed both as two-dimensional matrices, and additionally as non-related nodes, indicated as a line of nodes, wherein the number of nodes was reduced for a better presentability. This operation is also denoted as flattening. In this embodiment, the number of nodes 726 in the posterior node layer 716 of the fully connected layer 715 smaller than the number of nodes 724 in the anterior node layer 714. Alternatively, the number of nodes 726 can be equal or larger.

Furthermore, in this embodiment the Softmax activation function is used within the fully connected layer 715. By applying the Softmax function, the sum the values of all nodes 726 of the output layer 716 is 1, and all values of all nodes 726 of the output layer 716 are real numbers between 0 and 1. In particular, if using the convolutional neural network 700 for categorizing input data, the values of the output layer 716 can be interpreted as the probability of the input data falling into one of the different categories.

In particular, convolutional neural networks 700 can be trained based on the backpropagation algorithm. For preventing overfitting, methods of regularization can be used, for example dropout of nodes 720, ... , 724, stochastic pooling, use of artificial data, weight decay based on the L1 or the L2 norm, or max norm constraints.

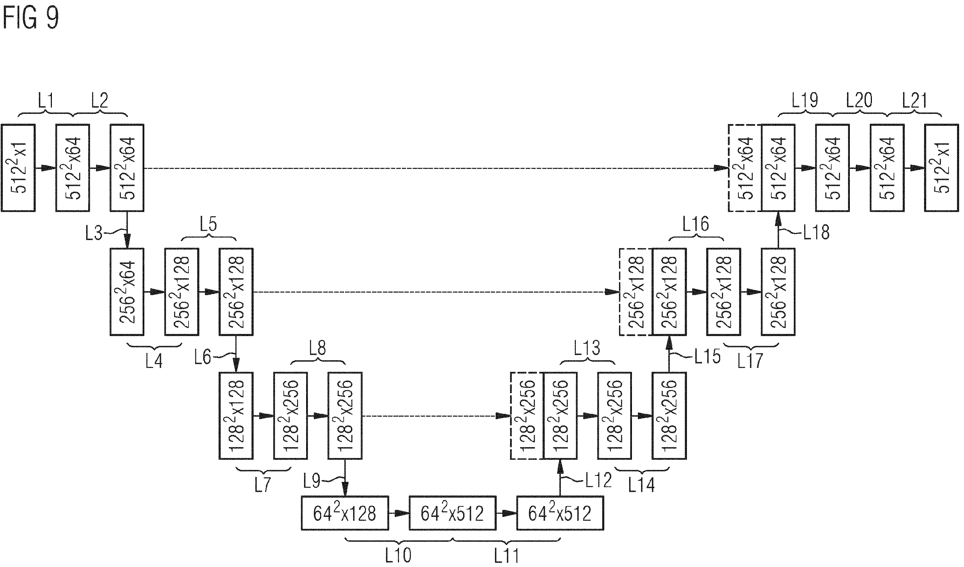

In the example of FIG 9, the MLM is a CNN, in particular, a convolutional neural network having a U-Net structure. In the displayed example, the input data to the CNN is a two-dimensional medical image comprising 512x512 pixels, every pixel comprising one intensity value. The CNN comprises convolutional layers indicated by solid, horizontal arrows, pooling layers indicating by solid arrows pointing down, and upsampling layers indicated by solid arrows pointing up. The number of the respective nodes is indicated within the boxes. Within the U-Net structure first the input images are downsampled, in particular by decreasing the size of the images and increasing the number of channels. Afterwards they are upsampled, in particular by increasing the size of the images and decreasing the number of channels, to generate a transformed image.

All except the last convolutional layers L1, L2, L4, L5, L.7, L8, L10, L11, L13, L14, L16, L17, L19, L20 use 3x3 kernels with a padding of 1, the ReLU activation function, and a number of filters or convolutional kernels that matches the number of channels of the respective node layers as indicated in FIG 9. The last convolutional layer uses a 1x1 kernel with no padding and the ReLU activation function.

The pooling layers L3, L6, L9 are max-pooling layers, replacing four neighboring nodes with only one node, the value being the maximum of the values of the four neighboring nodes. The upsampling layers L12, L15, L18 are transposed convolution layers with 3x3 kernels and stride 2, which effectively quadruple the number of nodes. The dashed horizontal arrows correspond to concatenation operations, where the output of a convolutional layer L2, L5, L8 of the downsampling branch of the U-Net structure is used as additional inputs for a convolutional layer L13, L16, L19 of the upsampling branch of the U-Net structure. This additional input data is treated as additional channels in the input node layer for the convolutional layer L13, L16, L19 of the upsampling branch.

For training the CNN, a database of 500 first medical images was used, wherein the respective segmentation mask was created based on annotations of expert radiologists. In particular, the experts determined for each of the 500 first medical images a segmentation mask for a structure of interest, where a value of 1 was assigned to pixels corresponding to the structure of interest, and a value of 0 was assigned to pixels not corresponding to the structure of interest. The database was split into training data (320 datasets), validation data (80 datasets) and test data (100 datasets). For training the CNN, the backpropagation algorithm was used based on a binary cross-entropy cost function

$$L(x, y) = \sum_i \sum_j BCE(y[i,j], M(x)[i,j])$$

with

$$BCE(a, b) := -a\log(b)(b) - (1-a)\log(1-b),$$

wherein x denotes a first medical image, y determines the corresponding segmentation mask created by the expert radiologist, and M(x) denotes the result of applying the CNN to the first input medical image x. Alternatively, one could use other cost functions like weighted binary cross entropy, Focal Loss or Dice Loss.

Based on the validation set of 80 datasets and the corresponding annotations, the best performing machine learning model out of several machine learning models (with different hyperparameters, for example number of layers, size and number of kernels, padding et cetera) was selected. The specificity and the sensitivity were determined based on the test set comprising 100 datasets and the corresponding annotations.

Independent of the grammatical term usage, individuals with male, female or other gender identities are included within the term.

**Claims**

1. Computer-implemented method for denoising medical imaging data, wherein

- a first imaging dataset (HE) generated according to a first imaging parameter set and depicting an object (5) and a second imaging dataset (LE) generated according to a second imaging parameter set depicting the object (5) are received;
- the first imaging dataset (HE) and the second imaging dataset (LE) are decomposed according to two or more spatial frequency bands;
- the decomposition (6a, 6b) comprises generating a high-frequency dataset of the first imaging dataset (HE-HF) and a high-frequency dataset of the second imaging dataset (LE-HF) corresponding to a high-frequency band of the two or more spatial frequency bands and a low-frequency dataset of the first imaging dataset (HE-LF) and a low-frequency dataset of the second imaging dataset (LE-LF) corresponding to a low-frequency band of the two or more spatial frequency bands;
- a trainable denoising algorithm (7) is trained by carrying out an optimization, which uses at least one parameter of the denoising algorithm (7) as optimization variable and an objective function (L1, L2, L3, L4, L5), which depends on a denoised high-frequency dataset (HE-HF') and the high-frequency dataset of the second imaging dataset (LE-HF), wherein the denoised high-frequency dataset (HE-HF') is generated by applying the denoising algorithm (7) to the high-frequency dataset of the first imaging dataset (HE-HF);
- the trained denoising algorithm (7) is applied to the high-frequency dataset of the first imaging dataset (HE-HF) to generate a final denoised high-frequency dataset (HE-HF').

2. Computer-implemented method according to claim 1, wherein

- the optimization comprises generating a first recombined dataset (HE') based on the low-frequency dataset of the first imaging dataset (HE-LF) and the denoised high-frequency dataset (HE-HF'); and
- the objective function (L1, L2, L3, L4, L5) depends on the first recombined dataset (HE') and the first imaging dataset (HE).

3. Computer-implemented method according to one of the preceding claims, wherein the objective function (L1, L2, L3, L4, L5) depends on a deviation of the denoised high-frequency dataset (HE-HF') from the high-frequency dataset of the second imaging dataset (LE-HF).

4. Computer-implemented method according to one of claims 1 or 2, wherein

- the optimization comprises generating a reference high-frequency dataset (LE-HF') by applying the denoising algorithm (7) to the high-frequency dataset of the second imaging dataset (LE-HF); and
- the objective function (L1, L2, L3, L4, L5) depends on a deviation of the denoised high-frequency dataset (HE-HF') from the reference high-frequency dataset (LE-HF').

5. Computer-implemented method according to one of the preceding claims, wherein

- the objective function (L1, L2, L3, L4, L5) depends on a further denoised high-frequency dataset (LE-HF') and the high-frequency dataset of the first imaging dataset (HE-HF), wherein the further denoised high-frequency dataset (LE-HF') is generated by applying the denoising algorithm (7) to the high-frequency dataset of the second imaging dataset (LE-HF); and
- the trained denoising algorithm (7) is applied to the high-frequency dataset of the second imaging dataset (LE-HF) to generate a further final denoised high-frequency dataset (LE-HF').

6. Computer-implemented method according to claim 5, wherein the objective function (L1, L2, L3, L4, L5) depends on a deviation of the denoised high-frequency dataset (HE-HF') from the further denoised high-frequency dataset (LE-HF').

7. Computer-implemented method according to one of claims 1 to 4, wherein

   - a trainable further denoising algorithm is trained by carrying out a further optimization which uses at least one parameter of the further denoising algorithm as further optimization variable and a further objective function (L1, L2, L3, L4, L5), which depends on a further denoised high-frequency dataset (LE-HF') and the high-frequency dataset of the second imaging dataset (LE-HF), wherein the further denoised high-frequency dataset (LE-HF') is generated by applying the further denoising algorithm to the high-frequency dataset of the second imaging dataset (LE-H F);
   - the trained further denoising algorithm is applied to the high-frequency dataset of the second imaging dataset (LE-HF) to generate a further final denoised high-frequency dataset (LE-HF').

8. Computer-implemented method according to one of the preceding claims, wherein

   - the first imaging dataset comprises a first two-dimensional X-ray image and/or the second imaging dataset comprises a second two-dimensional X-ray image; or
   - the first imaging dataset comprises a first three-dimensional X-ray-based image reconstruction and/or the second imaging dataset comprises a second three-dimensional X-ray-based image reconstruction.

9. Computer-implemented method according to claim 8, wherein the first imaging parameter set specifies a first energy spectrum and/or the second imaging parameter set specifies a second energy spectrum.

10. Computer-implemented method according to one of the preceding claims, wherein the decomposition (6a, 6b) comprises

    - a Fourier decomposition (6a, 6b) of the first imaging dataset (HE-HF) and/or a Fourier decomposition (6a, 6b) of the second imaging dataset (LE-HF); or
    - a wavelet decomposition (6a, 6b) of the first imaging dataset (HE-HF) and/or a wavelet decomposition (6a, 6b) of the second imaging dataset (LE-HF); or
    - a Laplace decomposition (6a, 6b) of the first imaging dataset (HE-HF) and/or a Laplace decomposition (6a, 6b) of the second imaging dataset (LE-HF); or
    - a Spline decomposition (6a, 6b) of the first imaging dataset (HE-HF) and/or a Spline decomposition (6a, 6b) of the second imaging dataset (LE-HF).

11. Computer-implemented method according to one of the preceding claims, wherein the decomposition (6a, 6b) is carried out according to at least one decomposition parameter and the optimization uses the at least one decomposition parameter as further optimization variable.

12. Computer-implemented method according to one of the preceding claims, wherein the denoising algorithm (7) comprises an artificial neural network.

13. Computer-implemented method according to one of the preceding claims, wherein the denoising algorithm (7) comprises a Gaussian filter and/or a bilateral filter and/or a guided filter.

14. Data processing system (4, 9), which is configured to carry out a computer-implemented method according to one of the preceding claims.

15. Computer program product comprising instructions, which, when executed by a data processing system (4, 9), cause the data processing system (4, 9) to carry out a computer-implemented method according to one of the preceding claims.

FIG 1

FIG 2

FIG 3

FIG 4

## FIG 5

## FIG 6

FIG 7

FIG 8

EP 4 679 359 A1

# FIG 9

**EUROPEAN SEARCH REPORT**

Application Number

EP 24 18 8034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG LIANGLIANG ET AL: "Two stage residual CNN for texture denoising and structure enhancement on low dose CT image", COMPUTER METHODS AND PROGRAMS IN BIOMEDICINE, ELSEVIER, AMSTERDAM, NL, vol. 184, 8 October 2019 (2019-10-08), XP086046779, ISSN: 0169-2607, DOI: 10.1016/J.CMPB.2019.105115 [retrieved on 2019-10-08] * Section 2; figures 1,2,3 * | 1-15 | INV. G06T5/60 G06T5/70 |

TECHNICAL FIELDS SEARCHED (IPC)

G06T

The present search report has been drawn up for all claims

| Place of search | Date of completion of the search | Examiner |
|---|---|---|
| The Hague | 2 December 2024 | Grigorescu, Simona |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. LEHTINEN et al.** Noise2Noise: Learning Image Restoration without Clean Data. *arXiv:1803.04189*

- **O. RONNEBERGER et al.** U-Net: Convolutional Networks for Biomedical Image Segmentation. *arXiv:1505.04597*